# EUROPÄISCHE PATENTSCHRIFT

(11) **EP 1 209 337 B1**
(45) Veröffentlichungstag und Bekanntmachung des Hinweises auf die Patenterteilung: **15.11.2006**
(21) Anmeldenummer: 01127894.2
(22) Anmeldetag: 23.11.2001
(51) Int. Cl.: F02B 63/00, F02B 67/06

(54) **Brennkraftmaschine**
Combustion engine
Moteur à combustion

(30) Priorität: 25.11.2000 DE 10058684
(43) Veröffentlichungstag der Anmeldung: 29.05.2002
(73) Patentinhaber: ADAM OPEL AG, 65423 Rüsselsheim (DE)
(72) Erfinder: Baxter, Ullrich, Dipl.-Ing- (FH), 64569 Nauheim (DE); Kristl, Manfred, Dipl.-Ing. (FH), 65468 Trebur (DE); Herchenröder, Jürgen, Dipl.-Ing. (FH), 65428 Rüsselsheim (DE); Ruckmich, Stefan, Dipl.-Ing., 55128 Mainz (DE); Galm, Jürgen, Dipl.-Ing., 65468 Trebur (DE)

(56) Entgegenhaltungen:
- EP-A- 0 775 815
- EP-A- 0 992 672
- DE-A- 19 732 370
- US-A- 4 257 370
- US-A- 5 000 142
- US-A- 5 190 005

## Beschreibung

Die Erfindung betrifft eine Brennkraftmaschine gemäß dem Oberbegriff des Patentanspruches 1.

Mit EP 0 775 815 B1 ist ein Aggregateträger für eine Brennkraftmaschine beschrieben, der als Steuergehäusedeckel ausgebildet ein von Öl benetztes Steuergehäuse zur Aufnahme einer Nockenwellen-Antriebskette verschließt.

Bei einer Brennkraftmaschine mit von einem Zahnriemen angetriebenen Nockenwellen ist eine solche Bauart nicht anwendbar, da der Zahnriemen in einer ölfreien Umgebung angeordnet sein muss.

Bei den bekannten Aggregateträgern der vorgenannten Art ist es auch von Nachteil, dass die Ölpumpe sowie die Kühlmittelpumpe als gesonderte Aggregate entweder am Zylinderblock selbst oder mit besonderen Verbindungselementen von außen an den Aggregateträger befestigt werden müssen.

Der Erfindung liegt die Aufgabe zugrunde, eine Brennkraftmaschine zu schaffen, bei welcher in besonders vorteilhafter Weise die Ölpumpe und die Kühlmittelpumpe gebildet werden, bei welcher diese Pumpen zumindest zum Teil gemeinsam mit anderen Aggregaten, wie z. B. dem Generator oder einem Klimakompressor an einen Aggregateträger vormontierbar sind und wobei dieser Aggregateträger wesentliche Elemente eines trockenen Zahnriemenkastens zur Aufnahme eines Zahnriemens für den Antrieb von Nockenwellen bildet.

Die Erfindung löst diese Aufgabe mit den Merkmalen des Anspruches 1. Vorteilhafte Weiterbildungen der Erfindung sind Gegenstand der Unteransprüche.

Ein Ausführungsbeispiel der Erfindung ist nachstehend anhand von Zeichnungen näher beschrieben. Es zeigen:

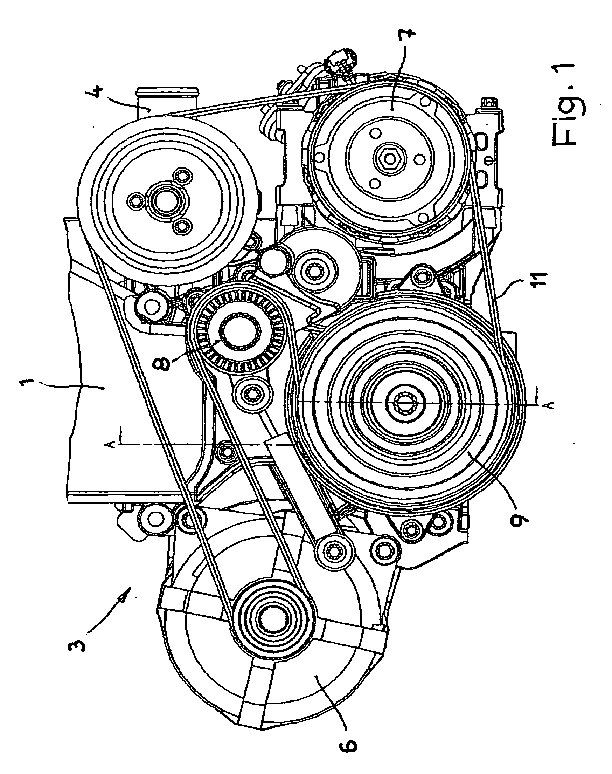

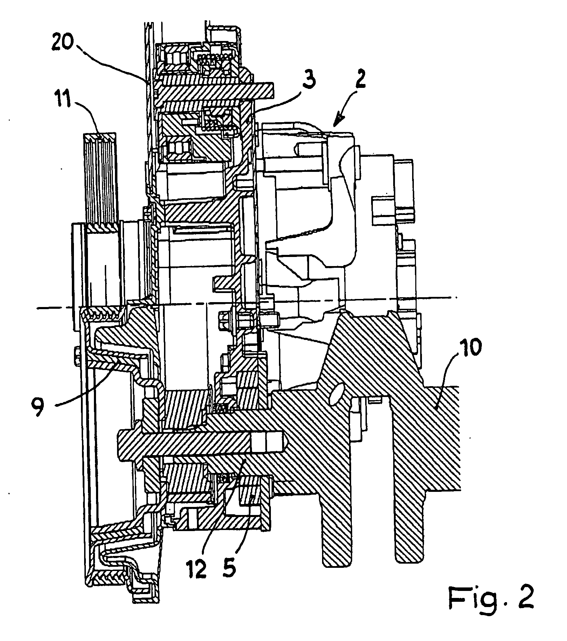

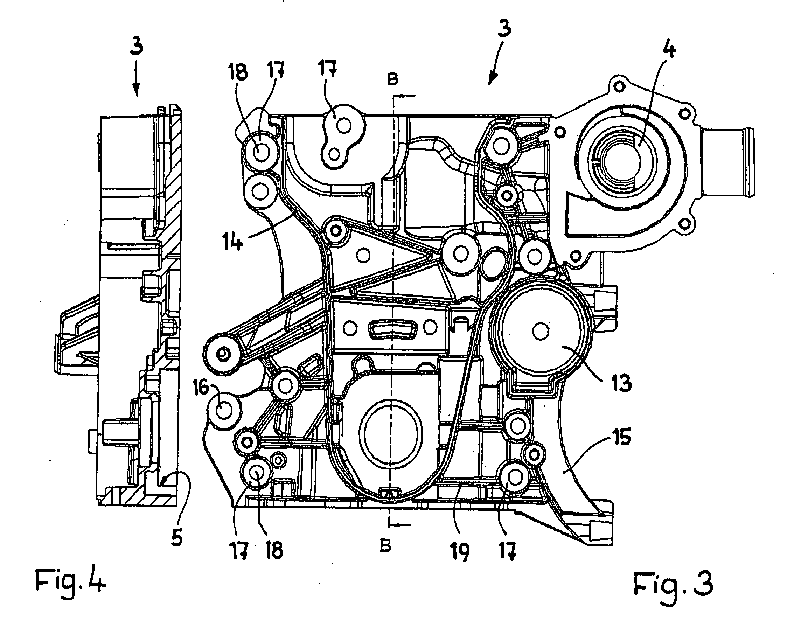

- Fig. 1: eine Ansicht auf den äußeren Riementrieb einer Brennkraftmaschine;
- Fig. 2: einen Schnitt entlang der Linie A - A in Fig. 1;
- Fig. 3: eine Ansicht auf den Aggregateträger der Brennkraftmaschine nach Fig. 1;

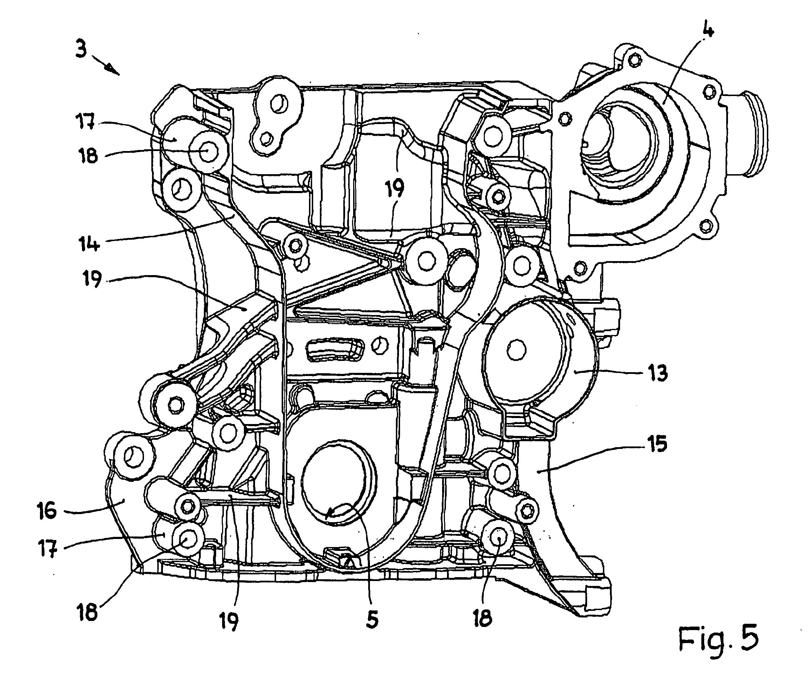

- Fig. 4: einen Schnitt entlang der Linie B - B in Fig. 3;
- Fig. 5: eine perspektivische Ansicht des Aggregateträgers nach Fig. 3 von vorn links;

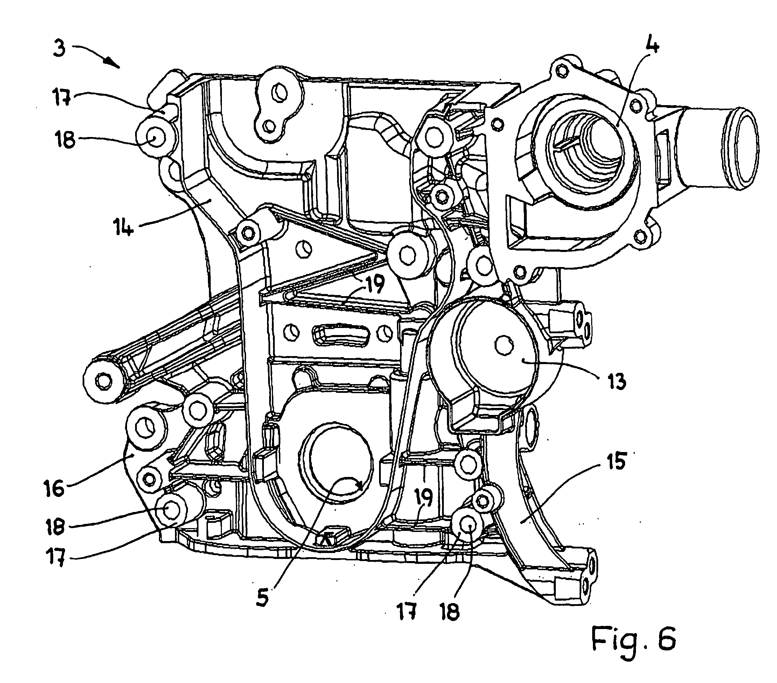

- Fig. 6: eine perspektivische Ansicht des Aggregateträgers nach Fig. 3 von vorn rechts.

An der Stirnseite 1 eines Zylinderblockes 2 ist an ebener Fläche ein Aggregateträger 3 befestigt. Der Aggregateträger 3 trägt eine Kühlmittelpumpe 4, ein Ölpumpengehäuse 5, einen Generator 6 und einen Klimakompressor 7. Des Weiteren trägt der Aggregateträger einen Riemenspanner 8. Von einem Antriebsrad 9, welches mit der Kurbelwelle 10 der Brennkraftmaschine verbunden ist, werden mit einem Riemen 11 der Generator 6, die Kühlmittelpumpe 4 und der Klimakompressor 7 angetrieben. Der Riemenspanner 8 sorgt in an sich bekannter Weise für eine optimale Riemenspannung.

Das Ölpumpengehäuse 5 als Teil des Aggregateträgers 3 erstreckt sich um einen Zapfen 12 der Kurbelwelle 10, so dass der Läufer der Ölpumpe in üblicher Weise von der Kurbelwelle 10 angetrieben werden kann.

Der Riemenspanner 8 ist mit seiner Spanneinrichtung in einer topfförmigen Aufnahme 13 gelagert, welche Teil des Aggregateträgers 3 ist.

An der von der ebenen zur Stirnseite 1 des Zylinderblockes 2 wegweisenden Seite des Aggregateträgers 3 ist eine umlaufende hohe Rippe 14 vorgesehen, welche nach oben in Richtung zum Zylinderkopf hin unterbrochen ist. Diese Rippe 14 bildet im Bereich des Aggregateträgers 3 die umlaufende Wand eines Zahnriemenkastens.

Am Aggregateträger 3 sind seitlich Zentrier- und Befestigungselemente 15 für einen Klimakompressor 7 sowie Befestigungselemente 16 für einen Generator 6 vorgesehen. Schraubenpfeifen 17 bilden Durchgangslöcher 18 zur sicheren Befestigung des Aggregateträgers 3 am Zylinderblock 2. Ein Teil der für die Befestigung des Aggregateträgers 3 erforderlichen Schrauben kann gleichzeitig zur Befestigung eines hier nicht dargestellten Motorhalters zur Aufhängung der Brennkraftmaschine z. B. in einem Fahrzeug genutzt werden.

Zwischen den Schraubenpfeifen 17, den Befestigungselementen 15, 16 der Nebenaggregate und der die Wand des Zahnriemengehäuses bildenden hohen Rippe 14 verlaufen versteifende Rippen 19.

Der am Zylinderblock 2 anliegende Korpus des Aggregateträgers 3 bildet die hintere Zahnriemenabdeckung des Zahnriemengehäuses, während ein auf der hohen Rippe 14 aufliegender Deckel 20 die vordere Abdeckung bildet.

Durch die Zusammenfassung der Bauteile Ölpumpe, Kühlmittelpumpe, Klimakompressor-Halterung, Generator-Halterung und hintere Zahnriemenabdeckung in nur einem Bauteil werden die Aufwendungen für Herstellung, Transport, Lagerung und Montage erheblich reduziert. Die Anbautoleranzen der Nebenaggregate werden minimiert, was auch eine Minimierung des Riemenschräglaufes und somit eine Reduzierung von Geräusch und Verschleiß ergibt. Die Montage der Kühlmittelpumpe kann außerhalb des Zylinderblockes erfolgen. Die Zugänglichkeit der Kühlmittelpumpe bei Service-Arbeiten wird stark verbessert. Der Zahnriemenspanner und die Umlenkrolle können vormontiert werden. Die Montage des Zahnriemens selbst wird vereinfacht. Durch die stabile hohe Rippe 14 nahe dem Zahnriemenrad auf der Kurbelwelle 10 entsteht ein sicherer Zahnriemen-Überspringschutz.

## Patentansprüche

1. Brennkraftmaschine mit obenliegender Nockenwelle und mit einem an der mit dem Riementrieb der Brennkraftmaschine versehenen Stirnseite eines Zylinderblockes angeordneten Aggregateträger, **dadurch gekennzeichnet, dass** der Aggregateträger (3) in Form eines Zwischenflansches zwischen dem Zylinderblock (2) und dem äußeren Riementrieb an der Stirnseite (1) des Zylinderblockes (2) anliegt, zumindest ein Kühlmittelpumpengehäuse (4) sowie ein Ölpumpengehäuse (5) umfasst und den Ölraum sowie den Kühlmittelraum des Zylinderblockes (2) stirnseitig abschließt sowie an der von der Stirnseite (1) des Zylinderblockes (2) wegweisenden Fläche des Aggregateträgers (3) Lagerstellen für Riemenumlenkrollen angeordnet sind und eine umlaufende hohe Rippe (14) vorgesehen ist, welche die umlaufende Wand eines Zahnriemengehäuses bildet.

2. Brennkraftmaschine nach Anspruch 1, **dadurch gekennzeichnet, dass** der Aggregateträger (3) an seinem äußeren Bereich mit Zentrier- und Befestigungselementen (15, 16) zur Aufnahme weiterer Aggregate wie Generator (6) oder Klimakompressor (7) versehen ist.

3. Brennkraftmaschine nach Anspruch 1 und 2, **dadurch gekennzeichnet, dass** der Aggregateträger (3) an der von der Stirnseite (1) des Zylinderblockes (2) wegweisenden Seite eine topfförmige Aufnahme (13) zur Lagerung eines Riemenspanners (8) bildet.

4. Brennkraftmaschine nach Anspruch 1 bis 3, **dadurch gekennzeichnet, dass** der Bereich innerhalb der umlaufenden Rippe (14) am Aggregateträger (3) durch einen Deckel (20) abgedeckt ist und somit einen Teil eines Zahnriemenkastens bildet.

5. Brennkraftmaschine nach einem der Ansprüche 1 bis 4, **dadurch gekennzeichnet, dass** der Aggregateträger (3) zwischen den zur seiner Befestigung vorgesehenen Schraubenpfeifen (17) sowie zwischen diesen und den Zentrier- und Befestigungselementen (15, 16) zur Lagerung der Nebenaggregate sowie zur Aufnahme (13) des Riemenspanners (8) und der Lagerstellen der Riemenumlenkrollen und zu der umlaufenden Wand des Zahnriemengehäuses durch Rippen (19) versteift ist.

## Claims

1. Internal combustion engine having an overhead camshaft and having a unit carrier, which is disposed on the end of a cylinder block provided with the belt drive of the internal combustion engine, **characterized in that** the unit carrier (3) lies in the form of an intermediate flange between the cylinder block (2) and the external belt drive against the end (1) of the cylinder block (2), comprises at least a cooling medium pump housing (4) and an oil pump housing (5) and closes off the face of the oil chamber and the coolant chamber of the cylinder block (2), and on the face of the unit carrier (3) directed away from the end (1) of the cylinder block (2) bearing points for belt guide pulleys are disposed and a peripheral high web member (14) is provided, which forms the peripheral wall of a toothed belt housing.

2. Internal combustion engine according to claim 1, **characterized in that** the unit carrier (3) is provided at its outer region with centring and fastening elements (15, 16) for receiving further units such as a generator (6) or air-conditioning compressor (7).

3. Internal combustion engine according to claim 1 and 2, **characterized in that** the unit carrier (3) at the side directed away from the end (1) of the cylinder block (2) forms a pot-like receiver (13) for the mounting of a belt tensioner (8).

4. Internal combustion engine according to claim 1 to 3, **characterized in that** the region inside the peripheral web member (14) on the unit carrier (3) is covered by a lid (20) and thus forms part of a toothed belt box.

5. Internal combustion engine according to one of claims 1 to 4, **characterized in that** the unit carrier (3) between the screw holes (17) provided for its fastening as well as between the screw holes (17) and the centring and fastening elements (15, 16) for mounting the auxiliary units and for receiving (13) the belt tensioner (8) and the bearing points of the belt guide pulleys and in relation to the peripheral wall of the toothed belt housing is reinforced by ribs (19).

## Revendications

1. Moteur à combustion interne avec arbre à cames en tête et avec un support de bloc disposé sur la face frontale d'un bloc-cylindres équipé de l'entraînement par courroie du moteur à combustion interne, **caractérisé en ce que** le support de bloc (3) est plaqué sous la forme d'une flasque intermédiaire entre le bloc-cylindres (2) et l'entraînement par courroie extérieure sur la face frontale (1) du bloc-cylindres (2), il comprend tout au moins un carter de pompe de refroidissement (4) ainsi qu'un carter de pompe à huile (5), et il ferme, côté frontal, le compartiment d'huile ainsi que le compartiment de refroidissement du bloc-cylindres (2), et **en ce que**, sur la surface du support de bloc (3) opposée à la face frontale (1) du bloc-cylindres (2), des paliers sont disposés pour des poulies de renvoi, et qu'une nervure haute circulaire (14) est prévue, laquelle forme la paroi circulaire d'un boîtier de courroie crantée.

2. Moteur à combustion interne selon la revendication 1, **caractérisé en ce que** le support de bloc (3) est équipé, sur sa zone extérieure, d'éléments de centrage et de fixation (15, 16) pour le logement d'autres organes comme un générateur (6) ou un compresseur de climatisation (7).

3. Moteur à combustion interne selon les revendications 1 et 2, **caractérisé en ce que** le support de bloc (3) forme, du côté opposé à partir de la face frontale (1) du bloc-cylindres (2), un logement (13) en forme de pot pour la réception d'un tendeur de courroie (8).

4. Moteur à combustion interne selon les revendications 1 à 3, **caractérisé en ce que** la zone à l'intérieur de la nervure circulaire (14) est recouverte d'un couvercle (20) au niveau du support de bloc (3), et forme ainsi une partie d'un carter de courroie crantée.

5. Moteur à combustion interne selon l'une des revendications 1 à 4, **caractérisé en ce que** le support de bloc (3) est renforcé par des nervures (19) entre les mandrins à vis (17) prévus pour sa fixation, ainsi qu'entre ceux-ci et les éléments de centrage et de fixation (15, 16) pour la réception des accessoires, ainsi que pour le logement (13) du tendeur de courroie (8) et des paliers des poulies de renvoi des courroies, et pour la paroi circulaire du boîtier de roue crantée.
